# EUROPEAN PATENT SPECIFICATION

(11) **EP 0 675 019 B1**
(45) Date of publication and mention of the grant of the patent: **05.02.1997**
(21) Application number: 95830073.3
(22) Date of filing: 06.03.1995
(51) Int. Cl.: B60K 37/02

(54) **Motor-vehicle dashboard with a foldable video display**
Armaturenbrett für ein Kraftfahrzeug mit einem klappbaren Video-Bildschirm
Tableau de bord pour véhicule à moteur, comportant un écran vidéo repliable

(30) Priority: 30.03.1994 IT TO940237
(43) Date of publication of application: 04.10.1995
(73) Proprietor: MAGNETI MARELLI S.p.A., 20145 Milano (IT)
(72) Inventor: Anerdi, Guiseppe, I-10020 Pecetto Torinese (Torino) (IT)
(74) Representative: Notaro, Giancarlo

(56) References cited:
- EP-A- 0 338 405
- WO-A-92/04202
- DE-A- 4 128 663
- DE-C- 975 769
- PATENT ABSTRACTS OF JAPAN vol. 15 no. 495 (P-1288) ,13 December 1991 & JP-A-03 215709 (ALPINE) 20 September 1991,

## Description

The present invention refers to motor-vehicle dashboards of the type indicated in the pre-characterizing portion of Claim 1, such as that disclosed in JP-A-3215709.

In recent years, an interest has been more and more developed towards navigation systems for motor-vehicles comprising a navigation computer and a video display, e.g. a liquid crystal video display, for optical display of information to the driver.

The integration of the video display in the dashboard however has relevant difficulties. Furthermore, the video display is somewhat bulky and therefore can not be arranged immediately adjacent to the instrument panel on the dashboard, so that the driver is compelled to turn his head towards the position in which the video display is located, in order to collect information therefrom. This causes a dicrease in the safety degree in driving and further implies some inconvenience, since the driver is compelled to change his driving habit of looking at the instrument panel, along the longitudinal plane containing the axis of the steering wheel, only during short time intervals in which he may look away from the road in front.

The object of the present invention is that of providing a motor-vehicle dashboard which enables a video display to be easily integrated without compelling the driver, when looking at the display, to change his usual driving attitude and/or to decrease his degree of attention in driving.

In order to achieve this object, the invention provides a motor-vehicle dashboard having the features indicated in Claim 1.

In one embodiment of the invention, said wall substantially extends horizontally along the upper edge or the lower edge of the instrument panel and said aperture is constituted by a slot formed in said wall from its front edge, the body of the display being pivotally supported by the two side surfaces of said slot around a transverse axis.

In another embodiment, the body is comprised of two portions which can be opened in a book-like fashion to said unfolded position for use.

A further embodiment provides for the possibility of adjusting the position of the body in the vertical direction once it has been rotated into its position for use.

Yet in another embodiment the video display may be folded in the upper wall of the casing of the steering shaft. In this regard, it must be noted that in the present description and in the appended claims, the expressions "dashboard" and "wall projecting from the instrument panel" must be understood in a broad sense, to comprise also adjacent parts such as said wall of the casing of the steering shaft.

As it is clearly apparent from the foregoing description, the invention enables a liquid crystal video display to be easily integrated in the dashboard while arranging it immediately adjacent to the instrument panel, i.e. in the usual area of observation of the driver. This results in a greater comfort for the driver and also provides a driving safety generally greater with respect to cases in which the display of the navigation system is arranged on the dashboard in a position remote from the instrument-panel. At the same time, when the display is in its folded rest position, the design of the dashboard is not modified at all with respect to a conventional dashboard with no display.

Further features and advantages of the invention will be come apparent from the following description with reference to the annexed drawings, given purely by way of non limiting example, in which:
figure 1 is a perspective view of a first embodiment of the invention in a first condition of use,
figure 2 shows a detail of figure 1 in a second condition of use,
figure 3 shows a variant of figure 1,
figure 4 shows a detail of figure 3 in a different condition of use,
figure 5 shows a variant of figure 4,
figure 6 shows a further variant of figure 2,
figure 7 is a front view of the detail of figure 6 in a different condition of operation,
figure 8 is a cross-section of view taken along line VIII-VIII of figure 6, and
figure 9 shows a further variant.

In the drawings, reference numeral 1 generally designates the dashboard of a motor car, comprising a body of plastic material 2 supporting an instrument panel 3, where instruments 4 are arranged, only some of which are shown, for clarity, in the drawings. Adjacent to the instrument panel 3, the dashboard 1 comprises an upper wall 5 and a lower wall 6 which are substantially flattened and project towards the driver.

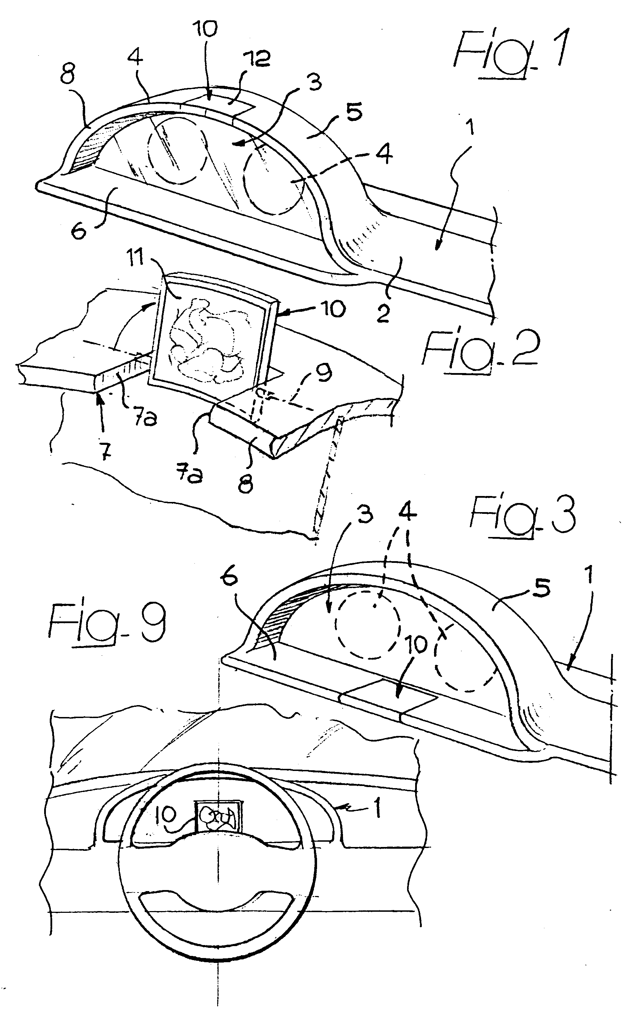

In the example of figures 1, 2, the central portion of the upper wall 5, which extends substantially horizontally, has a slot 7 extending from its front edge 8, having two sides surfaces 7a which pivotally support the flattened body 10 of a liquid crystal video display around a transverse axis 9, said display having a screen 11 and a rear wall 12. The display 10 therefore may be moved between a rest folded position (figure 1) in which it is contained in the plane of the central portion of upper wall 5, and an unfolded position of use (figure 2) which is substantially orthogonal to said plane.

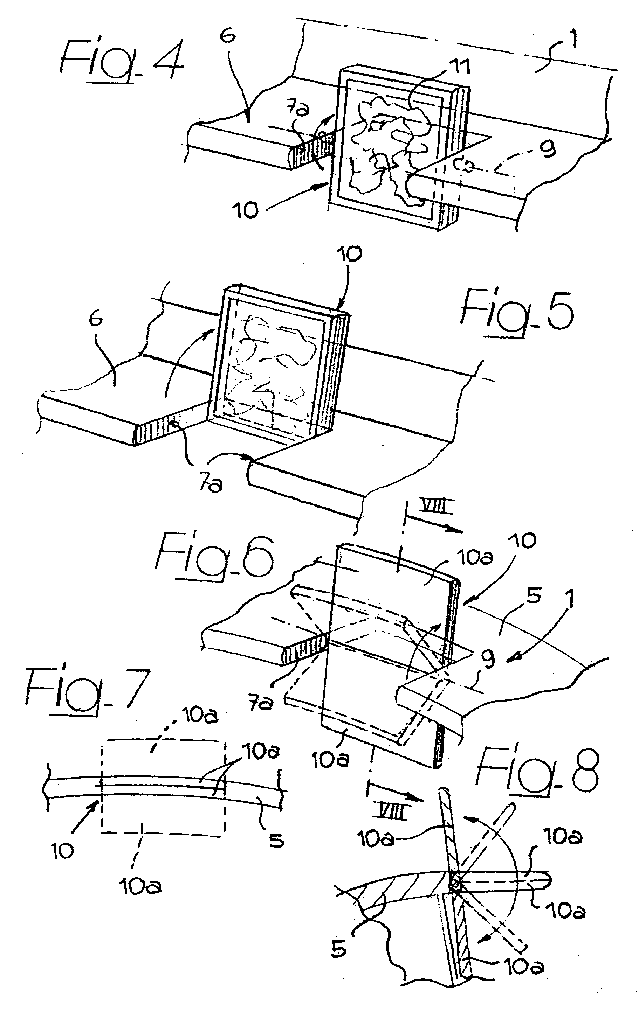

Figure 3 shows a variant in which the display 10 is arranged at the lower wall 6 of the dashboard. Figure 3 shows the display 10 in the folded rest position, whereas figure 4 shows the display 10 in the unfolded position.

Figure 5 shows a variant of figure 4, which differs only for that the body 10 of the display is pivotally mounted to the side surfaces 7a of slot 7 at the bottom ends of the latter.

Figure 6 shows a further variant of the solution of figure 1, wherein the body 10 may be separated into two parts 10a which can be opened in a book-like fashion around articulation axis 9, as clearly visible also with reference to figure 7, 8. In this case, one of the two parts 10a may be used as control panel of the display and the other part 10a may carry the liquid crystal video screen.

Figure 9 shows a variant in which the display 10 is formed in the upper wall of the casing of the steering shaft (not shown in the figure). In this regard it is to be noted that the expressions "dashboard" and "wall projecting from the instrument panel" must be understood in a broad sense, to mean also adjacent parts such as said wall of the casing of the steering shaft.

Naturally, while the principle of the invention remains the same, the details of construction may widely vary with respect to what has been described and illustrated purely by way of example.

For example, it is possible to provide for the body 10 of the video display to be manually displaceable between its folded rest position and its unfolded position of use, or also spring means may be provided for biassing the body of the display towards its unfolded position as a result of the disengagement of a mechanism for locking the display in its folded rest position. Yet motor means may also be provided for driving the rotation of the body of the display.

## Claims

1. Motor-vehicle dashboard including an instrument panel (3) and at least one wall (5, 6) projecting therefrom, wherein said dashboard (1) includes a liquid crystal video display (10) which has a substantially flattened body which is pivotally mounted on said dashboard so as to be movable between a folded rest position and an unfolded position of use, characterized in that said video display is mounted within an aperture (7) of said wall (5, 6) projecting from the instrument panel (3), so that when said video display is in its rest position its body (10) lies in the plane of said wall, whereas when said video display is in its position for use said body (10) is substantially orthogonal to said wall (5, 6) projecting from the instrument panel.

2. Dashboard according to claim 1, characterized in that said wall extends substantially horizontal along the edge of said instrument panel (3) and said aperture (7) is constituted by a slot formed in said wall (5, 6) from its front edge (8), said body (10) of the display being pivotally supported by two side surfaces (7a) of said slot (7) around a transverse axis (9).

3. Dashboard according to claim 2, characterized in that the body can be separated into two portions (10a) which can be opened in a book-like fashion into said unfolded position of use.

4. Dashboard according to claim 3, characterized in that one of said portions (10a) is used as a control-panel and the other portion (10a) is used as video screen.

5. Dashboard according to claim 1, characterized in that said wall is a portion of the casing of the steering shaft.

## Patentansprüche

1. Kraftfahrzeug-Armaturenbrett, das eine Instrumententafel (3) und wenigstens eine Wand (5,6), die davon vorsteht, enthält, wobei das Armaturenbrett (1) eine Flüssigkristall-Bildanzeige (10) enthält, die einen im wesentlichen abgeflachten Körper hat, der schwenkbar an dem Armaturenbrett angebracht ist, so daß er zwischen einer eingeklappten Ruhestellung und einer ausgeklappten Funktionsstellung bewegt werden kann, **dadurch gekennzeichnet, daß** die Bildanzeige in einer Öffnung (7) der Wand (5,6), die von der Instrumententafel (3) vorsteht, angebracht ist, so daß, wenn sich die Bildanzeige in ihrer Ruhestellung befindet, ihr Körper (10) in der Ebene der Wand liegt, während, wenn sich die Bildanzeige in ihrer Funktionsstellung befindet, der Körper (10) im wesentlichen rechtwinkelig zu der Wand (5,6) ist, die von der Instrumententafel vorsteht.

2. Armaturenbrett nach Anspruch 1, **dadurch gekennzeichnet, daß** sich die Wand im wesentlichen horizontal über die Kante der Instrumententafel (3) erstreckt, und die Öffnung (7) durch einen Ausschnitt gebildet wird, der in der Wand (5,6) von ihrer Vorderkante (8) her ausgebildet ist, wobei der Körper (10) der Anzeige um eine Querachse (9) schwenkbar von zwei Seitenflächen (7a) des Ausschnitts (7) getragen wird.

3. Armaturenbrett nach Anspruch 2, **dadurch gekennzeichnet, daß** der Körper in zwei Teile (10a) unterteilt sein kann, die buchartig in die ausgeklappte Funktionsstellung geöffnet werden können.

4. Armaturenbrett nach Anspruch 3, **dadurch gekennzeichnet, daß** einer der Teile (10a) als ein Bedienfeld genutzt wird, und der andere Teil (10a) als Bildschirm genutzt wird.

5. Armaturenbrett nach Anspruch 1, **dadurch gekennzeichnet, daß** die Wand ein Teil der Verkleidung der Lenkwelle ist.

## Revendications

1. Tableau de bord pour véhicule à moteur, comprenant un panneau à instruments (3) et au moins une paroi (5, 6) qui se projette de celui-ci, dans lequel ledit tableau de bord (1) inclut un affichage vidéo à cristaux liquides (10) qui présente un corps sensiblement aplati qui est monté en pivotement sur ledit tableau de bord de façon à être mobile entre une position de repos repliée et une position d'utilisation dépliée, caractérisé en ce que ledit affichage vidéo est monté dans une ouverture (7) de ladite paroi (5, 6) qui se projette depuis le panneau à instruments (3), de sorte que lorsque ledit affichage vidéo est dans sa position de repos son corps (10) repose dans le plan de ladite paroi, tandis que lorsque ledit affichage vidéo est dans sa position d'utilisation ledit corps (10) est sensiblement perpendiculaire à ladite paroi (5, 6) qui se projette depuis le panneau à instruments.

2. Tableau de bord selon la revendication 1, caractérisé en ce que ladite paroi s'étend sensiblement horizontalement le long du bord dudit panneau à instruments (3), et ladite ouverture (7) est constituée par une fente formée dans ladite paroi (5, 6) depuis son bord avant (8), ledit corps (10) de l'affichage étant supporté par deux surfaces latérales (7a) de ladite fente (7) en pivotement autour d'un axe transversal (9).

3. Tableau de bord selon la revendication 2, caractérisé en ce que le corps peut être séparé en deux parties (10a) qui peuvent être ouvertes à la manière d'un livre jusque dans ladite position d'utilisation dépliée.

4. Tableau de bord selon la revendication 3, caractérisé en ce que l'une desdites parties (10a) est utilisée comme panneau de commande, et l'autre partie (10a) est utilisée comme écran vidéo.

5. Tableau de bord selon la revendication 1, caractérisé en ce que ladite paroi est une partie du boîtier de l'arbre de direction.
